# EUROPEAN PATENT APPLICATION

(11) **EP 1 689 050 A1**
(43) Date of publication of application: **09.08.2006**
(21) Application number: 05250647.4
(22) Date of filing: 04.02.2005
(51) Int. Cl.: H01R 43/16, H01R 13/405, B29C 45/14

(54) **Method and apparatus for terminal row insert molding**

(71) Applicant: Meioukasei Co., Ltd., Ota-ku, Tokyo (JP)
(72) Inventor: Sakai, Keisuke, c/o Meioukasei Co., Ltd., Ota-ku, Tokyo (JP)
(74) Representative: Brown, David Leslie

(57) **Abstract**

The present invention provides a method of performing terminal insert molding in which the correct position of the hoop terminal (12) is maintained and any deformation thereof is prevented until its integration with the synthetic resin is attained, and an insert molding apparatus in which the hoop terminal is reliably inserted into predetermined groove of the mold (22), making it always possible to secure accurate alignment of the hoop terminal with the mold. According to the terminal row insert molding method, on one side of a carrier base plate (218) for conveying terminal materials to a processing position of an insert molding machine, a predetermined number of terminals (228) to be subjected to insert molding are formed at a minute pitch alternately with and parallel to open grooves (226) and are grouped into terminal rows (212), each terminal row being composed of an intermediate portion (232) near the carrier base plate and a free end (220) far from the carrier base plate, in which, in performing successive bending on the intermediate portion through intermittent feeding by a conveying mechanism for forward feeding, a dummy terminal plate (222), which binds the free ends for each feeding pitch of the conveying mechanism, is bonded to forward end portions of the free ends not affected by the bending with connecting means allowing separation along the feeding direction.

## Description

### BACKGROUND OF THE INVENTION

### 1.Field of the Invention

The present invention relates to successive molding of connector terminal units each composed of terminals arranged at a minute pitch and, more specifically, to a method and apparatus for successively performing insert molding on terminal rows formed on a carrier structured by a continuous strip-like thin plate (hereinafter referred to as a hoop terminal) through successive intermittent automatic feeding to form connector terminal units out of the terminal rows.

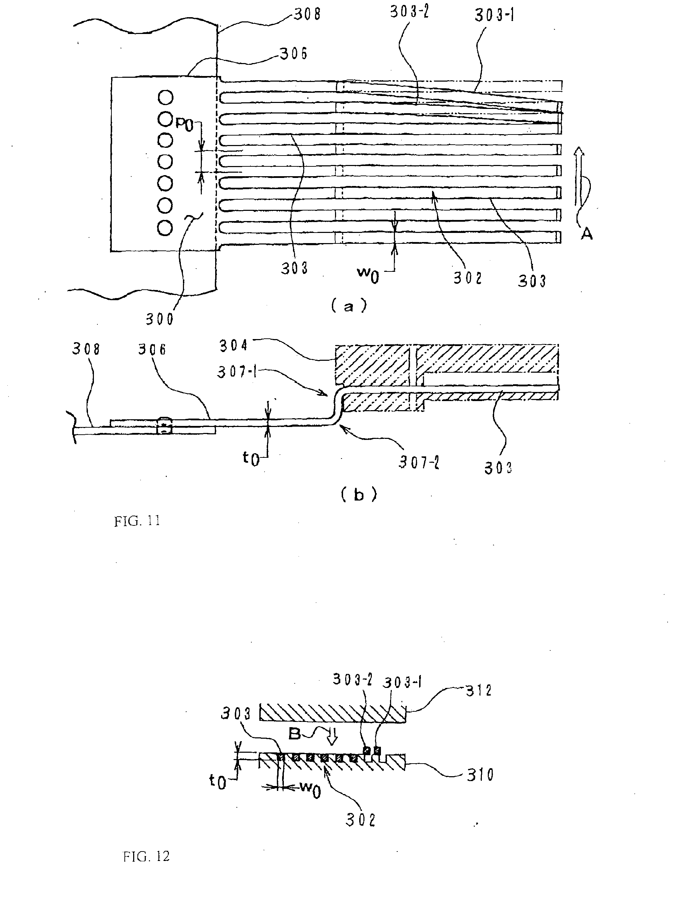

Fig. 11 shows a conventional method of performing insert molding on a hoop terminal. As shown in the drawing, in the method, a hoop terminal 302 structured by terminals with a width w0 formed by punching, at a requisite pitch p0, of a highly conductive thin plate 300 with a thickness t0, is integrated with synthetic resin through insert molding. When forming the hoop terminal 302 into a connector terminal unit 304 through insert molding, the hoop terminal is bent in a direction perpendicular to the plane of the drawing (Although its sectional configuration is not specifically shown, it is bent into, for example, an L-shape, a reversed-L-shape, a U-shape, a reversed-U-shape, or a combination thereof) to align a comb-teeth-like terminal row 302, structured by a plurality of terminals 303 extending in parallel from one side of a carrier base plate 306, with a synthetic resin molding mold.

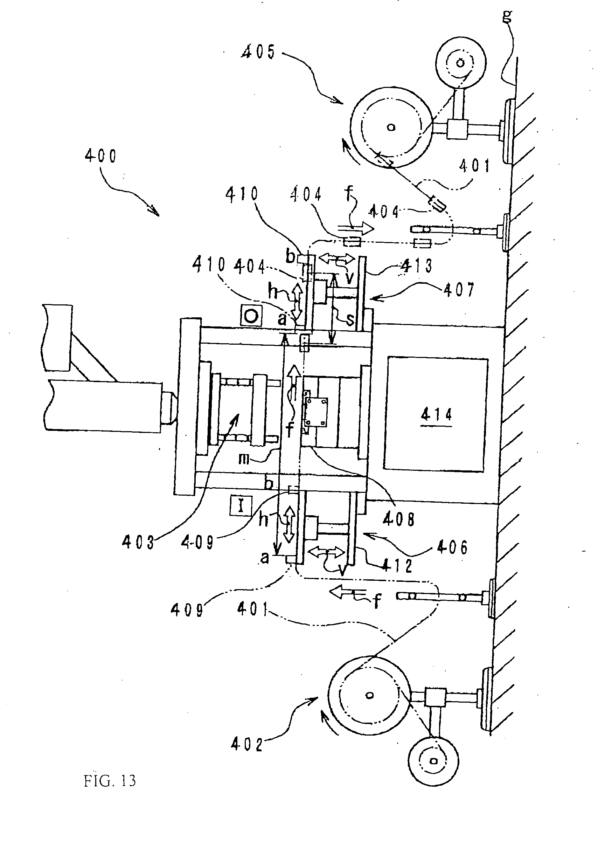

As schematically shown in Fig. 13, in an insert molding apparatus 400 for use in this hoop terminal molding method, a hoop terminal 401, stocked in the form of a spiral roll in which in-mold terminal rows are arranged at equal intervals on a carrier structured by a strip-like metal thin plate, is fed intermittently from an unwinding device 402 in synchronism with the molding cycle of an injection molding machine 403 (as indicated by the arrow f) to produce connector terminal units 404 (depicted in a somewhat exaggerated fashion in the drawing) as resin molding products with electrical connection terminals embedded therein as indicated by symbol w, the terminal units being formed automatically through successive molding, and successively sent to a take-up device 405. Symbol g indicates a horizontal installation surface for the hoop terminal insert molding apparatus 400.

Transfer devices 406 and 407 for feeding the hoop terminal 401 intermittently forwards are respectively installed on the input side I and the output side O with respect to the feeding direction, and the hoop terminal 401 to be subjected to insert molding is retained on either side of a mold 408 by pressing it by clamp mechanisms 409 and 410 against horizontally reciprocating conveyance bases 414 and 415, which reciprocate in a pair and in synchronism with each other from clamp positions a to release positions b by a stroke S as indicated by the arrows h, to thereby feed the hoop terminal 401 intermittently forwards; at the same time, they ascend and descend vertically (as indicated by the arrow V) to fit in the hoop terminal to be inserted at a predetermined position provided in the cavity of the mold 408, with the above process being repeated for each injection molding shot.

### [Patent Document 1] JP 3,338,667 B

It should be noted, however, that, as a result of the recent demand for a reduction in the size of an electronic apparatus, such as a mobile phone, electrical connection terminal portions are required to be further reduced in size; for example, the above terminals 303 must be of such an extremely fine configuration as to have a width w0 of 0.2 mm or less and an inter-terminal pitch p0 of 0.3 mm or less. In this case, assuming that the thickness t0 of a highly conductive thin plate 100 constituting the terminal material is, for example, 0.1 mm, there is the possibility of the terminal free end portions being deformed by an unexpected slight external force during movement in the feeding direction indicated by the arrow A as in the case of the terminals 303-1 and 303-2 shown in Fig. 12A.

As a result, the adjacent terminals of the hoop terminal 302, extending from the carrier base plate 306, are allowed to come into contact with each other during the process, or, as in the case of the terminals 303-1 and 303-2 shown in Fig. 12A, the positions of a synthetic resin mold 310 where fitting is to be effected are deviated, resulting in the fitting being hindered; if an upper mold 312 were closed in this state (as indicated by the arrow B), not only would the expensive mold be damaged, but also the expensive highly conductive material forming the hoop terminal 302 could not be formed into a product, resulting in a rather serious loss when the downtime of the manufacturing machine is taken into account.

Further, in the insert molding apparatus 400 shown in Fig. 13, the conventional transfer devices 406 and 407 are formed integrally with a base 424 of the main body of an injection molding machine 403, so that each time the mold 408 of the injection molding machine 403 is replaced due to a change in the production lot amount, model changes, a deterioration in the mold 408, etc., it is necessary to modify and adjust the mounting positions of the transfer devices 406 and 407, the movement stroke s, the installation interval of the clamp mechanisms 409 and 410 for grasping the hoop terminal 402 at the proper position, etc. so as to adapt them to the specifications of the new mold 408. Thus, when the requirements for the connector terminal units 404 are of various kinds, the requisite flexibility is not available, resulting in a delay or difficulty in meeting such requirements. Further, there is a need for adjustment time for adjusting the operation of the transfer devices 406 and 407 in correspondence with the mold 408, resulting in an increase in the downtime of the injection molding machine 403 for the replacement of the mold 408 and in a deterioration in production efficiency.

Further, the injection molding machine 403 is integrated with the transfer devices 406 and 407 and provided separately from the mold 408, so that it is necessary to secure their positional relationship accurately in conformity with the movement of the mold, which means it is by no means easy to accurately adjust the positional relationship of the transfer devices 406 and 407, fixedly provided on the injection molding machine 403, in conformity with the movement of the mold each time the mold 408 is replaced by a new one. Further, the positions of the transfer devices 406 and 407 at which the hoop terminal 402 is supported are outside the injection molding machine 403, so that the support span m is rather long, and the relative replacement of the hoop terminal 402 due to the central load generated by the ascent/descent movement (indicated by the arrow V) at the time of insertion/detachment of the mold 408 is rather large, resulting in the clamp positions for the transfer devices 406 and 407 being unstable. As a result, the accuracy in the repeated transfer deteriorates, and it is impossible to avoid the possibility of generation of deviation of the clamp position for the hoop terminal 402 and misalignment thereof with the mold 408 due to accumulative errors. Thus, for their correction, it is necessary to station an inspection worker to perform checking frequently, resulting in an increase in cost in any way.

The transfer devices 406 and 407 in the insert molding apparatus are of the type in which the hoop terminal 402 is maintained horizontal on either side of the mold 408, the terminal row being lowered in the cavity from above the mold 408; when the terminals forming the terminal row are of a minute dimension (e.g., when a plurality of terminals with a width of 0.2 mm are arranged at a pitch of 0.3 mm), the support is rather unstable, and, if the side walls of terminal row fitting grooves formed in the cavity are touched even slightly, reliable fitting is hindered; or dregs in the previous process, or inadvertent, slight deformation caused during transfer can hinder the normal accommodation of the terminals, which can lead to not only a defective product but also damage of the mold 408.

### SUMMARY OF THE INVENTION

The present invention has been made in view of the above problems in the prior art. It is an object of the present invention to provide a method of performing terminal insert molding in which the correct position of the hoop terminal is maintained and any deformation thereof is prevented until its integration with the synthetic resin is attained, and to provide an insert molding apparatus in which the hoop terminal is reliably inserted into predetermined grooves of the mold, making it always possible to secure accurate alignment of the hoop terminal with the mold.

To attain the above obj ect, according to the present invention, there is provided a terminal row insert molding method in which, on one side of a carrier base plate for conveying terminal materials to a processing position of an insert molding machine, a predetermined number of terminals to be subjected to insert molding are formed at a minute pitch alternately with and parallel to open grooves and are grouped into terminal rows, each terminal row being composed of an intermediate portion near the carrier base plate and a free end far from the carrier base plate, wherein, in performing successive bending on the intermediate portion through intermittent feeding by a conveying mechanism for forward feeding, a dummy terminal plate, which binds the free ends for each feeding pitch of the conveying mechanism, is bonded to forward end portions of the free ends not affected by the bending with connecting means allowing separation along the feeding direction.

The above object of the present invention can be attained by a structure where the carrier base plate is a highly conductive metal strip, a structure where the metal strip forming the terminals is a highly conductive metal strip, and a structure where the connecting means allowing separation effects a temporary connection by crimping.

Further, the above object can be attained by a terminal row insert molding method in which, on one side of a carrier base plate for conveying terminal materials to a processing position of an insert molding machine, a predetermined number of terminals to be subjected to insert molding are formed at a minute pitch alternately with and parallel to open grooves and are grouped into terminal rows, each terminal row being composed of an intermediate portion near the carrier base plate and a free end far from the carrier base plate, a process of successive bending being performed on the intermediate portion through intermittent feeding by a forward-feeding pressing machine, wherein a process for insert molding on each terminal row formed of a highly conductive metal strip material together with synthetic resin comprises the steps of: bonding a dummy terminal plate long enough to effect binding of the intermediate portion for each feeding pitch of the forward-feeding pressing machine to a forward end portions of the free end; bending the intermediate portion; putting the intermediate portion that has undergone bending into a mold for the synthetic resin; injecting the synthetic resin into the mold to integrally mold the terminal row into a terminal unit; and removing the dummy terminal.

Further, according to the present invention, there is provided an insert molding apparatus, including an automatic terminal transfer mechanism for successively and intermittently feeding a hoop terminal to an injection molding machine, wherein a device for transferring a hoop terminal intermittently and automatically is directly fixed to a mold itself attached to the injection molding machine.

Further, in the insert molding apparatus, the device for transferring a hoop terminal intermittently and automatically includes a pair of devices driven on the input side and the output side of the mold in synchronism with each other and respectively and directly fixed to side surfaces on the input side and the output side of the mold.

Further, the mis-insert-molding preventing mechanism of the present invention includes an in-mold hoop mechanism for automatic production of connector terminal units by performing insert molding on minute-pitch terminal rows arranged at equal intervals on a carrier structured by a strip-like metal thin plate and fed to the injection molding machine intermittently and continuously, wherein there is provided a sensing device for confirming correct alignment of the terminal row with a mating position of the mold cavity prior to clamping when the terminal row is fed automatically and intermittently to the mold of the injection molding machine and fitted in at the proper mating position of the mold cavity while in a still state.

Further, when the upper surface of the terminal row inserted is pressurized by a head at the forward end of an elastically urged presser arm toward the fit-engagement position of the mold cavity, the sensing device issues an alarm if the presser arm does not reach a predetermined position but stops outside a predetermined permissible range, thereby stopping the operation of the in-mold hoop mechanism.

The hoop terminal insert molding method of the present invention allows insert molding of minute-pitch terminals with high accuracy, so that the method is effective in the molding of a connector terminal unit in which terminals with a width of 0.2 mm or less are arranged at a pitch of 0.3 mm or less on a conductive plate with a thickness of 0.1 mm or less.

Further, in the method of the present invention for performing insert molding on minute-pitch terminals with high accuracy, a dummy terminal is bonded to the terminals inserted to bind the terminals with each other, whereby the terminals are reinforced, thereby preventing deformation of the terminals with bent portions arranged at a minute pitch and maintaining the requisite positional accuracy.

Thus, in the method of the present invention for performing insert molding on minute-pitch terminals with high accuracy, when fitting the terminals in the synthetic resin mold, it is possible to prevent "galling" caused by defective alignment of the terminals with the mold and damage of the mold, thereby making it possible to achieve an improvement in terms of mass-productivity with safety.

Further, the terminal transfer mechanism incorporated into the insert molding apparatus of the present invention is integrated with the mold to form a hoop terminal intermittent automatic transfer device while securing accuracy in its relationship with the mold, so that the terminal transfer mechanisms can be integrally attached and detached to and from an arbitrarily selected injection molding machine while maintaining the requisite positional accuracy with respect to the mold, and there is no need to adjust the terminal transfer device each time the mold is replaced by a new one, making it possible to immediately perform insert molding on a hoop terminal.

Further, in the prior art, due to the incorporation of the transfer device in the molding machine, the alignment of the mold with respect to the transfer device is rather unstable and inaccurate, whereas, in the in-mold hoop mechanism of the present invention, the transfer device is incorporated into the mold and operates integrally with the mold, so that there is no fear of the positional accuracy of the transfer device with respect to the mold deteriorating, making it possible to secure the requisite transfer accuracy.

Thus, in the terminal transfer mechanism of the present invention incorporated into the mold, the width of the portion thereof constituting the fulcrum when transferring the hoop terminal is substantially reduced, thereby making it possible to markedly improve the accuracy in repeated transfer.

In the mis-insert-molding preventing mechanism of the present invention, any abnormality is sensed prior to clamping, at the time of insertion of the insert terminals into the mold, and an alarm is issued, so that it is possible to prevent molding of a defective product, and no wasteful injection of resin is involved; further, the mold suffers no damage, so that it is possible to achieve a reduction in production cost and an improvement in production efficiency.

### BRIEF DESCRIPTION OF THE DRAWINGS

In the accompanying drawings:
Fig. 1 is a schematic explanatory view of an injection molding machine according to an embodiment of the present invention in which a mis-insert-molding preventing mechanism is applied to an insert molding apparatus;
Fig. 2A is a plan view of a mis-insert-molding preventing mechanism according to an embodiment of the present invention;
Fig. 2B is a side view, partly in section, of the same;
Fig. 3 is a partially enlarged side view of a terminal presser head in a mis-insert-molding preventing mechanism according to an embodiment of the present invention;
Fig. 4 is a flowchart for illustrating molding operation in a mis-insert-molding preventing mechanism according to the present invention;
Fig. 5 is a schematic explanatory side view of a terminal transfer mechanism incorporated in a mold of an insert molding apparatus according to an embodiment of the present invention;
Fig. 6 is a schematic partial side view showing the output side of a transfer device of a terminal transfer mechanism incorporated in a mold according to the present invention;
Fig. 7 is a flowchart illustrating operation of a terminal transfer mechanism incorporated in a mold according to the present invention;
Figs. 8A and 8B are plan views of a hoop terminal in a terminal transfer mechanism incorporated in a mold according to an embodiment of the present invention;
Figs. 9A, 9B, and 9C illustrate a terminal row insert molding method according to the present invention, showing a terminal row prior to insert molding, of which Fig. 9A is a plan view of terminals that have undergone bending, showing unbent portions on the right-hand end, Fig. 9B is a sectional view taken along the line B-B of Fig. 9A, and Fig. 9C is a sectional view taken along the line C-C of Fig. 9A;
Fig. 10 is a schematic plan view illustrating a terminal row insert molding method according to the present invention, showing a production process for a four-terminal-integrated type connector terminal unit;
Fig. 11 is an explanatory view illustrating a problem involved in a terminal row prior to a conventional insert molding;
Fig. 12 is an explanatory view illustrating a problem involved in a conventional terminal row insert molding method; and
Fig. 13 is a schematic explanatory side view illustrating a conventional insert molding method.

### DESCRIPTION OF THE PREFERRED EMBODIMENTS

The best mode for realizing a terminal insert molding method according to the present invention and an apparatus for the method will be described with reference to the drawings.

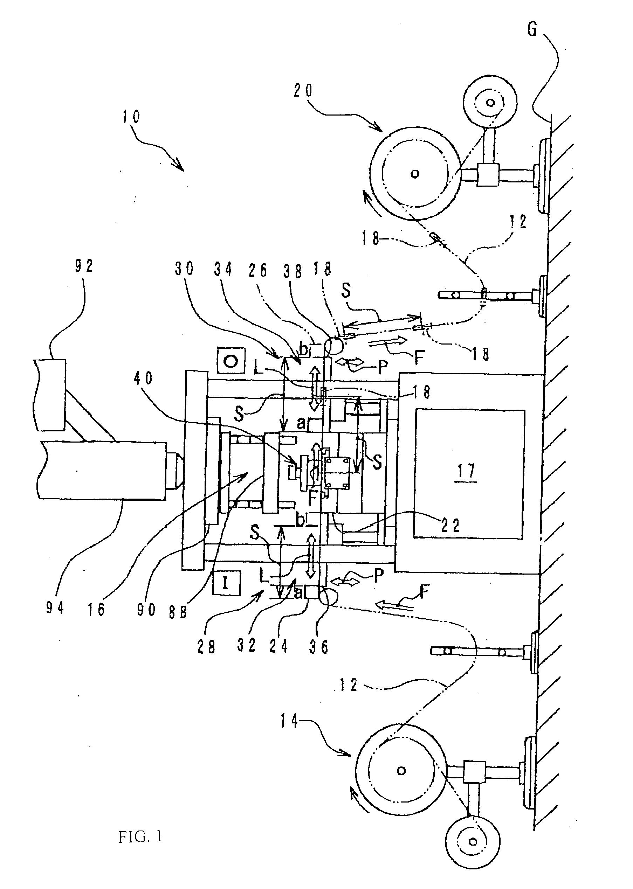

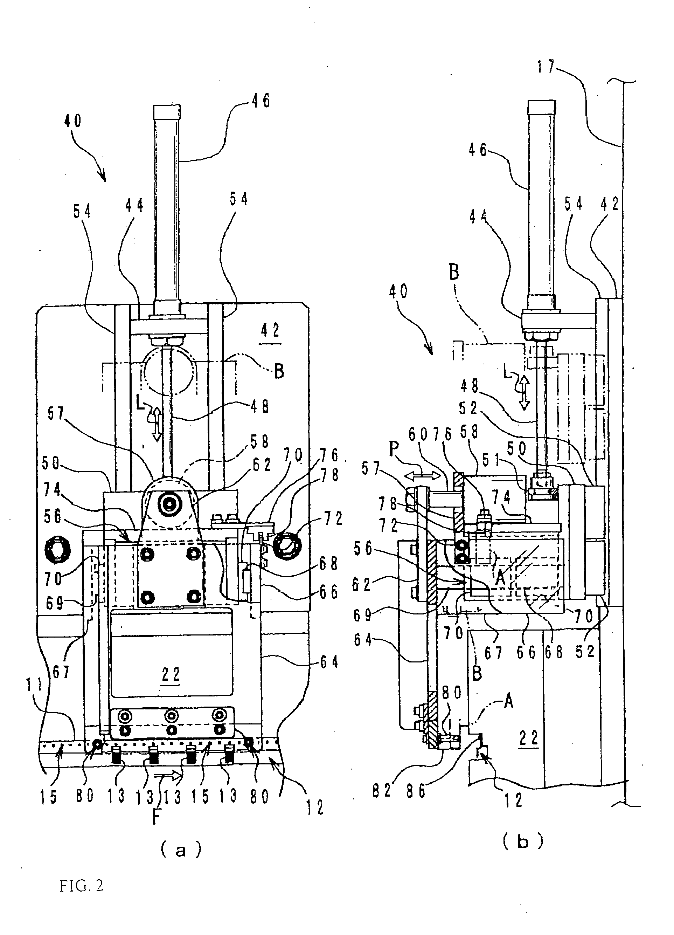

Fig. 1 is a front view of an insert molding apparatus according to the present invention, showing an in-mold hoop mechanism 10 fixedly provided on a horizontal installation surface G. Figs. 2A and 2B are a plan view and a side view, partly in section, of a mis-insert-molding preventing mechanism 40 of an insert molding apparatus according to a first embodiment of the present invention. In the in-mold hoop mechanism 10 shown in Fig. 1, a spiral-ring-like stock of a hoop terminal 12 in which a plurality of terminal rows 13 are arranged at equal intervals on a carrier 11 (strip-like thin metal plate) shown in Figs. 2A and 2B is transferred from an unwinding device 14 intermittently in synchronism with the molding cycle of an injection molding machine 16 (in the direction of the arrow F), and resin-molded connector terminal units 18 with the terminal rows 13 for electrical connection embedded therein (somewhat exaggerated in their depiction in Fig. 1) are formed successively and automatically before being sent to a successive take-up device 20.

The in-mold hoop mechanism 10 is the same as the conventional apparatus shown in Fig. 13 except for the mis-insert-molding preventing mechanism 40. The mechanism will be schematically described; a feeding mechanism for feeding the hoop terminal 12 intermittently forwards is formed by one-way transfer devices 28 and 30 fixedly provided on the input side I and the output side O of a mold 22 with respect to the horizontal feeding direction (the arrow F) and having clamp mechanisms 24 and 26 each of which moves from a clamp position (start point) a to a release position (end point) b in a pair and in synchronism with each other.

The clamp mechanism 24 and 26 are fixedly provided on conveyance bases 32 and 34, and move integrally in the horizontal direction (the arrow L) and the vertical direction (the arrow P). At the start points a of the conveyance bases 32 and 34, the clamp mechanisms 24 and 26 retain the carrier 11 portion of the hoop terminal 12 by pressing the same against the conveyance bases 32 and 34. When the conveyance bases 32 and 34 move to the end points b to complete clamping, the clamp mechanisms 24 and 26 release the carrier 11 portion of the hoop terminal 12 from the conveyance bases 32 and 34.

When the curing/cooling process of the injection molding machine 16 is completed and the mold 22 is opened, raising/lowering bases 36 and 38 raise the conveyance bases 32 and 34 holding the hoop terminal 12 on either side of the mold 22 by means of the clamp mechanisms 24 and 26 to a height where the connector terminal unit 18 injection-molded and pushed out beyond the hoop terminal 12 does not interfere with the mold 22, and the conveyance bases 32 and 34 move as they are to the end points b. As a result of this movement, the subsequent terminal row 13 faces the fitting position of the mold 22, and then the raising/lowering bases 36 and 38 descend vertically to fit in the subsequent terminal row 13 at a predetermined position of the cavity of the mold 22. The mis-insert-molding preventing mechanism 40 of the present invention is interlocked with this fitting operation.

At the rear of the mold 22, the mis-insert-molding preventing mechanism 40 of the present invention, shown in an enlarged state in Figs. 2A and 2B, is fixed to an injection molding machine bed 17 by means of a base 42, with the functional axes (the horizontal direction L and the vertical direction P) being perpendicular to the transfer direction (the arrow F) of the hoop terminal 12 in a plane parallel to the transfer plane for the hoop terminal 12. A hydraulically or pneumatically controlled horizontal cylinder 46 is attached to a bracket 44 fixedly provided on the base 42, and the forward end of a piston 48 is connected to a joint 51 of a horizontal movement base 50, which reciprocates (the arrow L) in a horizontal plane perpendicularly to the transfer direction (the arrow F) of the hoop terminal 12. The horizontal movement base 50 is supported by a slide bearing 52 and slides smoothly along a horizontal guide rail 54.

A hydraulically or pneumatically controlled vertical cylinder 58 is attached to a bracket 57 extending horizontally from a column frame 56 fixedly provided on the horizontal movement base 50, and a vertical movement base 62 is connected to the forward end of a piston 60, with a terminal presser arm 64, which extends in the direction of the mold 22, being connected to the vertical movement base 62. Guide plates 66 and 67 are provided on both side surfaces of the terminal presser arm 64 so as to extend vertically, and vertical guide rails 68 and 69 fixedly provided on their respective inner sides are held in slide contact with a slide bearing 70 provided on an opposing surface of the column frame 56 so as to be smoothly slidable in the vertical direction. On the guide plate 66, which is caused to ascend and descend in the vertical direction (the arrow P) integrally with the terminal presser arm 64 by the piston 60 driven by the vertical cylinder 58 integrally with the terminal presser arm 64, there is installed a detection plate 72 for descent position detection, which optically cooperates in a non-contact manner with a photo micro sensor 78 mounted through a pedestal 76 to a rear wall 74 extending from the column frame 56.

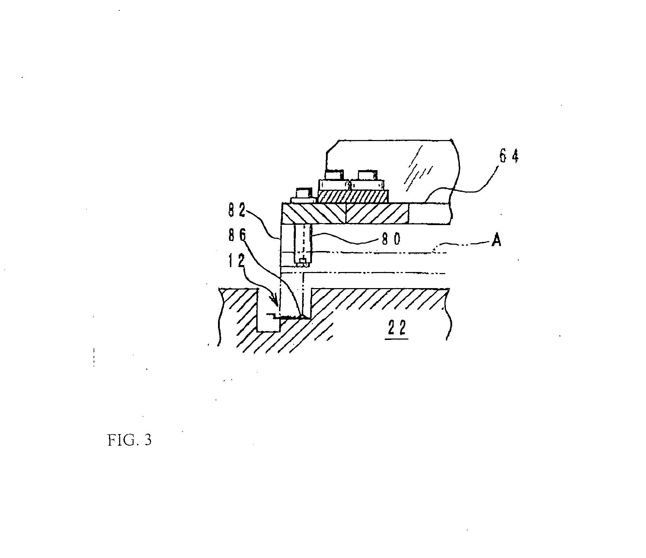

Fig. 3 is a partially enlarged side view of a terminal presser head 80 in the mis-insert-molding preventing mechanism 40 according to an embodiment of the present invention. Numeral 82 indicates a contact member, which is arranged at the forward end of the terminal presser arm 64 so as to be opposed to the terminal rows 13 arranged on the carrier 11 of the hoop terminal 12; the terminal presser arm 64, to either end of which the terminal presser head 80 is fixed, is caused to vertically ascend and descend through translation by the vertical cylinder 58 mounted on the horizontal movement base 50 shown in Figs. 2A and 2B, and, with respect to the feeding direction of the hoop terminal 12 (the arrow F), the horizontal movement base 50 is caused to horizontally enter the route of the hoop terminal 12 in a horizontal plane parallel to the feeding plane of the hoop terminal 12 by the piston 48 of the horizontal cylinder 46, and is separated from the route of the hoop terminal 12 to be restored to the origin B (indicated by the chain double-dashed line).

With the mold 22 of the injection molding machine 16 being open (see Fig. 1), when the conveyance bases 32 and 34, retaining the hoop terminal 12 on either side of the mold 22 by the clamp mechanisms 24 and 26, descend through operation of the ascent/descent bases 36 and 38, and a positioning pin 86 protruding at a predetermined position in the cavity of the mold 22 is fitted into the corresponding pilot hole 15 of the carrier 11, the correct insert position for the terminal row 13 of the hoop terminal 12 to be inserted is set. Here, the mis-insert-molding preventing mechanism 40 is programmed so as to drive the piston 48 by means of the horizontal cylinder 46 to cause the horizontal movement base 50 to advance toward the mold 22, causing the contact member 82 at the forward end of the terminal presser arm 64 to be positioned directly above the terminal row 13 to be insert-molded, and then operating the vertical cylinder 58 to lower the terminal presser head 80 toward the terminal row 13.

When the insert alignment of the terminal row 13 to be inserted with the mold 22 is correctly effected, the terminal presser head 80 smoothly descends integrally with the terminal presser arm 64 to be fit-engaged with the positioning pin 86, and the terminal presser arm 64 reaches a predetermined descent position A (indicated by the chain double-dashed lines). Thus, the detection plate 72, simultaneously descending integrally with the vertical movement base 62, intercepts the optical path of the photo micro sensor 78.

When it senses the intrusion of the detection plate 72, the photo micro sensor 78 issues a signal to operate the vertical cylinder 58, raising the vertical movement base 62 to a height where the terminal presser head 80 does not interfere with the mold 22; then, the horizontal cylinder 46 is operated to cause the horizontal movement base 50 to retreat, and the terminal presser arm 64 is moved to the origin B (indicated by the chain double-dashed line) spaced apart from the mold 22 and set on standby. Here, the injection molding machine 16 immediately executes clamping without a hitch, making it possible to perform the production of the connector terminal unit 18 through injection molding reliably without involving any problem.

Conversely, when the photo micro sensor 78 does not sense the intrusion of the detection plate 72, it is determined by the program that there is some abnormality, and an alarm is issued, the terminal presser arm 64 being restored to the origin B (indicated by the chain double-dashed line) by procedures reverse to the above and set on standby. At the same time, the injection molding machine 16 stops the operation of the clamping/transfer devices 28 and 30.

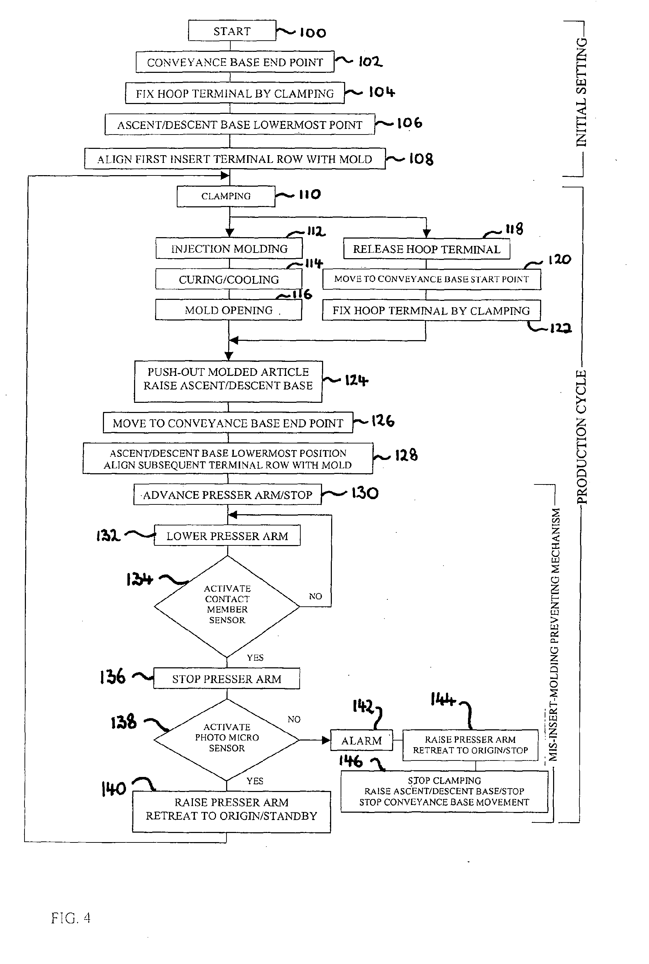

The operation of mis-insert-molding preventing mechanism 40 of the present invention is executed according to a program by a microcomputer control in interlock with the operation of the in-mold hoop mechanism 10. Thus, the operation of the in-mold hoop mechanism 10 including the mis-insert-molding preventing mechanism 40 of the present invention will be described with reference to the flowchart of Fig. 4. The initial setting is started in step 100, and the conveyance bases 32 and 34 are moved to the end points b in step 102, and, in step 104, the carrier 11 of the hoop terminal 12 is fixed by being pressed against the conveyance bases 32 and 34 by the clamp mechanisms 24 and 26. In step 106, the ascent/descent bases 36 and 38 of the transfer devices 28 and 30 are lowered to the lowermost end. In step 108, the pilot hole 15 corresponding to a predetermined terminal row 13 is aligned with the positioning pin 86 of the mold 22, and the terminal row 13 to be inserted is fit-engaged at a predetermined position in the cavity of the mold 22, with which the initial setting is completed.

In step 110, the mold 22 is raised together with the transfer devices 28 and 30 by a well-known means, and press-fitted to a runner plate 90 together with the upper mold 88, fixing the hoop terminal 12 by retaining it with the mold 22; in step 112, resin supplied from a pre-plash ring 92 is injected from the nozzle of an injection cylinder 94 into the cavity of the mold 22 where the hoop terminal 12 is set, thereby effecting molding.

In step 110, the hoop terminal 12 is fixed by clamping, and, in step 118, a stage is attained where the clamp mechanisms 24 and 26 release the carrier 11 of the hoop terminal 12; in step 120,. the conveyance bases 32 and 34 move to the start points a, keeping the clamp mechanisms 24 and 26 released. In step 122, the clamp mechanisms 24 and 26 are operated again, and the carrier 11 of the hoop terminal 12 is fixed by being pressed against the conveyance bases 32 and 34 for standby.

When, in step 114, the molding is completed, and an appropriate curing/cooling period has elapsed, the mold 22 is opened by a well-known means in step 116, and, in step 124, the molded connector terminal unit 18 formed by molding is pushed out; at the same time, while fixing the hoop terminal 12 on the conveyance bases 32 and 34 by the clamp mechanisms 24 and 26, the ascent/descent bases 36 and 38 are raised, and the hoop terminal 12 is retained at a height where the connector terminal unit 18 formed by insert molding does not come into contact with the mold 22.

In step 126, while keeping the hoop terminal 12 at a high position in the clamp mechanisms 24 and 26 by the ascent/descent bases 36 and 38, the conveyance bases 32 and 34 move by a predetermined stroke S to reach the end points b. Of the hoop terminal 12, successively fed by the predetermined stroke S, the subsequent terminal row 13 is matched with the insert position, and the corresponding pilot hole 15 is aligned with the positioning pin 86 of the mold 22. In step 128, the ascent/descent bases 36 and 38 descend to the lowermost position while retaining the hoop terminal 12 with the clamp mechanisms 24 and 26, and the terminal row 13 of the hoop terminal 12 is correctly fitted in at the insert position of the mold 22.

In step 130, the horizontal cylinder 46 is operated to cause the horizontal movement base 50 to advance, together with the horizontal movement base 50, the terminal presser arm 64 by the piston 48 from the origin B where it has been on standby, causing the terminal presser head 80 to stop directly above the carrier 11 of the hoop terminal 12 successively fed inside the mold 22. The position of the terminal presser head 80 coincides with the vertical line of the positioning pin 86, and the contact member 82 is situated directly above the corresponding terminal row 13. In step 132, the vertical cylinder 58 is operated, and the terminal presser arm 64 starts to descend. When, in step 134, the sensor for sensing contact of the contact member 82 with the terminal row 13 does not operate, the procedure returns to step 134, and the descent is continued until contact of the contact member 82 with the terminal row 13 is sensed.

In step 136, at a predetermined descent position A, contact of the contact member 82 with the terminal row 13 is sensed, and the presser arm 64 stops descending. There is a time delay between the point in time when the contact of the contact member 82 with the terminal row 13 is sensed and the point in time when the terminal presser arm 64 mechanically stops descending, so that this time delay is electronically controlled, absorbing minute stress or deformation generated in the contact member 82 in the meantime through cooperation with an elastic buffer mechanism contained in the contact member 82.

In step 138, the stop position of the presser arm 64, that is, the stop position A of the terminal presser head 80, is confirmed. Thus, it is checked whether or not the photo micro sensor 78 has sensed the stop position A of the detection plate 72, which descends integrally with the presser arm 64 before stopping. When the terminal row 13 is correctly fitted in at a predetermined position in the mold 22 and there is no abnormality, the detection plate 72 descends to and stops at the position A, where it intercepts the optical path of the photo micro sensor 78 installed at a predetermined height, so that the photo micro sensor 78 operates. Thus, in step 140, the vertical cylinder 58 is operated to raise the presser arm 64, raising the terminal presser head 80 to a height where it does not interfere with the mold 22; then, the horizontal cylinder 46 is operated to drive the piston 48, thereby causing the horizontal movement base 50 to retreat to the standby position at the origin B. When the operation in step 140 is completed, the procedure returns to step 110, where clamping is effected; from this onward, a production cycle starts in which the operations of steps 110 to step 140 are automatically repeated.

When, in step 138, the stop position of the detection plate 72 is not detected by the photo micro sensor 78, the terminal row 13 is held between the edge portions of the fitting grooves formed in the mold 22 and the contact member 82 to hinder descent of the presser arm 64, so that an alarm is immediately issued in step 142, and the procedure advances to step 144. As in step 140, in step 144, the vertical cylinder 58 is operated to raise the presser arm 64, raising the terminal presser head 80 to a height where it does not interfere with the mold 22; then, the horizontal cylinder 46 is operated to drive the piston 48, causing the horizontal movement base 50 to retreat to and remain on standby at the origin B. In step 146, a signal is sent to the control program for the injection molding machine 16 to stop the clamping, and the conveyance bases 32 and 34 are stopped at the clamp positions a, causing the ascent/descent bases 36 and 38 to stop at the raised position to stop the operation of the in-mold hoop mechanism.

As stated above, the same operations are repeated continuously and automatically, and it is ascertained for each shot of the injection molding machine 16 that the hoop terminal 12 has been inserted into the mold 22 reliably prior to clamping, and then the connector terminal unit 18 is molded, sending it successively to take-up device 20, so that a reliable successive automatic molding is realized.

As can be seen from the above description, in the mis-insert-molding preventing mechanism of the present invention, it is possible to markedly simplify the mechanism through interlock with the molded product pushing-up mechanism of the injection molding machine, and it is possible to perform a safe and reliable insert molding successively and reliably. As a result, an improvement in terms of duty cycle is achieved, which is effective in shortening delivery times.

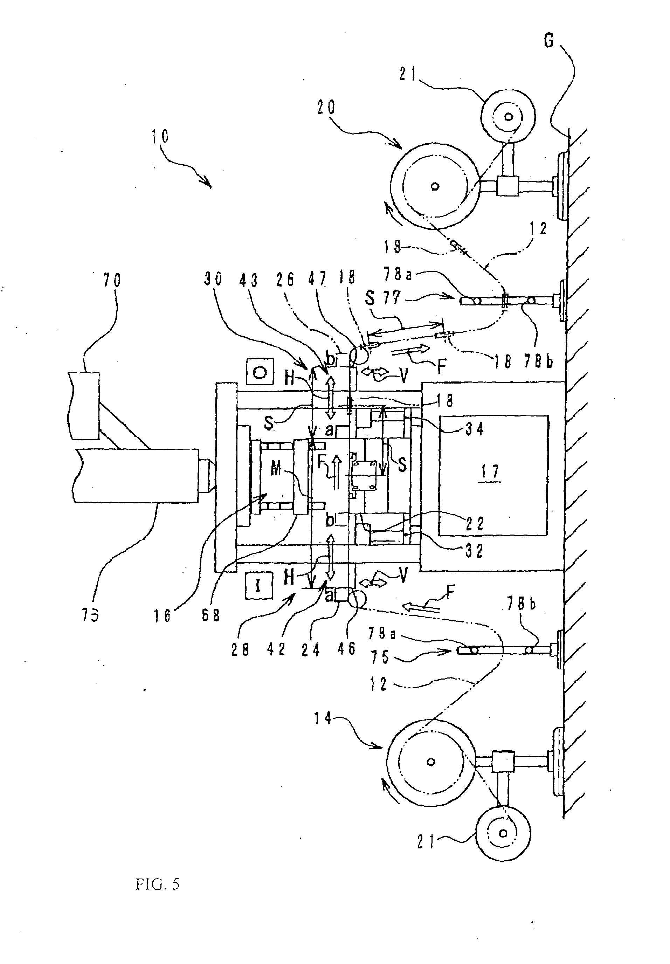

Next, a terminal transfer mechanism (hereinafter referred to as the in-mold hoop system) incorporated in a mold according to a second embodiment of the present invention will be described with reference to Figs. 5 through 8. The components that are the same as those of the hoop terminal successive injection molding mechanism of Figs. 1, 2A, and 2B described above are indicated by the same reference numerals, and a description thereof will be omitted.

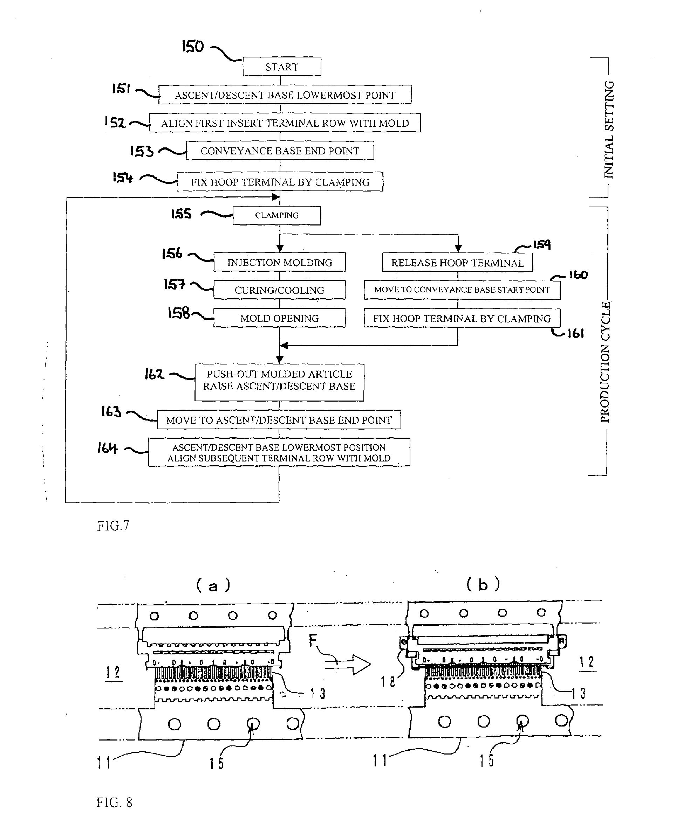

As shown in Figs. 8A and 8B, the hoop terminal 12 has the terminal rows 13 arranged at equal intervals on the carrier 11 structured by a thin strip material, which is prepared as a spirally wound stock, and is transferred (in the direction of the arrow F) from the unwinding device 14 intermittently in synchronism with the molding cycle of the injection molding machine 16 to successively form resin-molded connector terminal units 18 (somewhat exaggerated in their depiction in Fig. 5), which are sent to the take-up device 20. Numeral 21 indicates inter-layer sheet reels; on the unwinding device 14 side, the reel peels off a protective sheet held between the layers of the wound hoop terminal 12 and takes it up; and, on the take-up device 20 side, the reel feeds the protective sheet and inserts it between the layers of the wound hoop terminal 12, thereby preventing the products from being damaged by inter-surface rubbing caused by the contact due to the winding.

The feeding mechanisms for feeding the hoop terminal 12 intermittently forwards are fixedly provided on the input side I and the output side O of the mold 22 with respect to the feeding direction (the arrow F), and are formed by one-way transfer devices 28 and 29 in which the clamp mechanisms 24 and 26 are operated in a pair and in synchronism with each other so as to move from the clamp positions (start points) a to the release positions (end points) b. The support span M of the hoop terminal 12 at the clamp positions (start points) a of the clamp mechanisms 24 and 26 can be set considerably smaller as compared with the support span m in the above-described conventional example. The transfer device 28 on the input side I and the transfer device 30 on the output side O are fixed to the side surfaces of the mold 22 by means of mounting bolts 35 through the intermediation of an input side mounting seat 32 and an output side mounting seat 34, respectively, and ascend and descend integrally with the mold 22 independently of the main body base 17 of the injection molding machine 16.

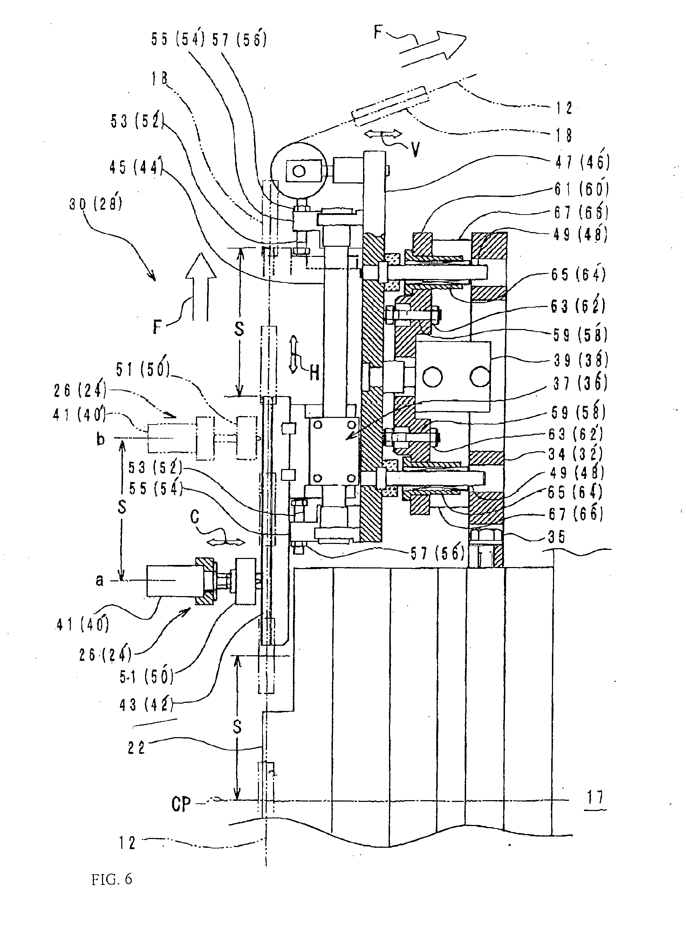

Fig. 6 is a partially enlarged side view of an embodiment of the transfer device 30 arranged on the output side O; the reference numerals in parentheses indicate the components of the input side transfer device 28, which is equivalent to the output side transfer device 30. The transfer device 28 on the input side I is formed in mirror symmetry with respect to the central plane CP, and solely the horizontal movements of the clamp mechanisms 26 (24') are effected in the same direction in synchronism with each other; as to the vertical movements and the operation of clamping or releasing the hoop terminal 12, which are effected by hydraulic or pneumatic cylinders (hereinafter simply referred to as the cylinders), are completely the same as those of the above embodiment, and are computer-controlled. Numeral 37 (36') indicates a horizontal feed cylinder, which reciprocates an ascent/descent base 47 (46') with the conveyance base 43 (42') mounted thereon vertically (in the direction of the arrow V) along a guide column 49 (48'). Numeral 41 (40') indicates a clamp cylinder, which raises and lowers a clamp pressure plate 51 (50') (as indicated by the arrow C) to press the carrier 11 portion of the hoop terminal 12 against the conveyance base 43 (42') or release it therefrom.

The clamp cylinder 41 (40') is fixedly provided on the conveyance base 43 (42'), and moves integrally with the conveyance base 43 (42') in the horizontal direction (the arrow H) and in the vertical direction (the arrow V), and the clamp pressure plate 51 (50') is lowered at the start point a of the conveyance base 43 (42') to press the carrier 11 portion of the hoop terminal 12 against the conveyance base; when the conveyance base 43 (42') moves to the end point b, the clamp pressure plate 51 (50') is raised to release the carrier 11 portion of the hoop terminal 12 from the conveyance base 43 (42'). The movable range for the conveyance base 43 (42'), which is between the start point a and the end point b, can be set through fine adjustment by a screw mechanism of the length by which a stopper bolt 53 (52') protrudes toward the conveyance base 43 (42') from a bracket 55 (54') threadedly engaged therewith. The set position of the stopper bolt 53 (52') is fixed by a lock nut 57 (56').

Similarly, at the lowermost descent position of the ascent/descent base 47 (46'), to place the terminal row 13 of the hoop terminal 12 to be inserted into the mold 22 at the correct fitting position with respect to the mold 22 prior to clamping, the length of a stopper bolt 59 (58') vertically screwed into a support base 61 (60') and upwardly protruding therefrom is set through fine adjustment by a screw mechanism, and positional fixation thereof is effected by a lock nut 63 (62'). Fixed to the support base 61 (60') is a guide bush 65 (64') supporting an ascent/descent cylinder 39 (38') and a guide column 49 (48') vertically and slidably, with the support base being supported and fixed by at least four columns 67 (66') (two of which are shown) at appropriate positions vertically spaced apart from the mounting seat 34 (32') of each transfer device 30 (28').

Next, the operation of the in-mold hoop system of the present invention will be described with reference to the flowchart of Fig. 7.

As shown in Figs. 8A and 8B, the insert terminal rows 13 are arranged using as the reference the pilot holes 15 formed in the carrier 11 at predetermined intervals. Fig. 8A shows the hoop terminal 12 in the state prior to molding, and Fig. 8B shows the hoop terminal 12 in the state in which it has been insert-molded into a connector terminal unit 18. The initial setting is started in step 150. In step 151, the ascent/descent base 47 (46') of each transfer device 30 (28') is lowered to the lowermost end, and, in step 152, a pilot hole 15 corresponding to a predetermined terminal row 13 and a positioning pin (not shown) of the mold 22 are aligned with each other, and the terminal row 13 to be inserted is placed at a predetermined position in the cavity of the mold 22. In step 153, the conveyance base 43 (42') is moved to the end point b, and the positioning pin P of the clamp pressure plate 51 (50') is brought into correspondence with the pilot hole 15. At this time, the setting position of the stopper bolt 53 (52') is adjusted as needed. In step 154, the clamp cylinder 41 (40') is operated, and the carrier 11 of the hoop terminal 12 is fixed by pressing it against the conveyance base 43 (42') by the clamp pressure plate 51 (50'), with which the initial setting is completed.

In step 155, the mold 22 is raised together with the transfer device 30 (28') by a well-known means, and is pressed against a runner plate 70 together with the upper mold 68 to effect clamping, with the hoop terminal 12 being fixed while held by the mold 22, and, in step 156, resin supplied from a pre-plash ring 71 is injected from a nozzle of an injection cylinder 73 into the cavity of the mold 22, where the hoop terminal 12 is placed, to perform molding.

On the other hand, at the stage where the hoop terminal 12 is fixed by the clamping in step 155, the clamp mechanism 26 (24') raises the clamp pressure plate 51 (50') in step 159, and the procedure advances to the stage where the carrier 11 of the hoop terminal 12 is released; when, in step 160, the conveyance base 43 (42') is moved to the start point a, the clamp mechanism 26 (24') is operated again in step 121, and the carrier 11 of the hoop terminal 12 is fixed by being pressed against the conveyance base 43 (42') by the clamp pressure plate 51 (50') for standby.

When the molding is completed in step 157, and an appropriate curing/cooling period has elapsed, the mold 22 is opened in step 158 by a well-known means, and the connector terminal unit 18 formed of molding is pushed out in step 162, and, at the same time, the ascent/descent base 47 (46') is raised while fixing the hoop terminal 12 to the conveyance base 43 (42') by the clamp mechanism 26 (24'), retaining the hoop terminal 12 at a height where the insert-molded connector terminal unit 18 does not come into contact with the mold 22.

In step 163, the conveyance base 43 (42') moves by a predetermined stroke S while holding the hoop terminal 12 by the clamp mechanism 26 (24') before reaching the end point b. The position of the end point b is determined by the stopper bolt 53 (52'), and, of the hoop terminal 12 successively fed by the predetermined stroke S, the subsequent terminal row 13 is matched with the insert position, and the corresponding pilot hole 15 is aligned with the positioning pin of the mold 22. In step 164, the ascent/descent base 47 (46') descends to the lowermost end position while holding the hoop terminal 12 by the clamp mechanism 26 (24'), and the terminal row 13 of the hoop terminal 12 is accurately fitted in at the insert position in the cavity of the mold 22.

When the operation of step 164 is completed, the procedure returns to step 155 again, and from this onward, a production cycle starts in which the processes of step 155 to step 164 are automatically repeated. The adjustment positions for the stopper bolt 53 (52') for setting the horizontal movement range of the conveyance base 43 (42') and a stopper bolt 59 (58') for setting the lowermost end of the ascent/descent base 47 (46') are intrinsic to the mold 22, so that they are not altered unless there is some unexpected change or intentional positional displacement regarding the transfer device 30 (28'), which moves together with the mold 22.

Here, as stated above, clamping is effected on the mold 22 and resin is injected into the mold 22 by the injection cylinder 73 to insert-mold the subsequent hoop terminal 12 to produce a connector terminal unit 18. In the meantime, the hoop terminal 12 is held by and fixed to the mold 22, so that if the clamp mechanism 26 (24') raises the clamp pressure plate 51 (50') to release the hoop terminal 12, there is no change in the positional relationship between the hoop terminal 12 and the mold 22. Thus, the transfer device 30 (28') releases the hoop terminal 12, and returns to the start point a together with the clamp mechanism 26 (24'), which has become free after releasing the hoop terminal 12, and the clamp pressure plate 51 (50') is lowered again to fix the hoop terminal 12 to the conveyance base 43 (42') by press-fitting until the molding is completed. From this onward, similar operations are successively repeated, and each resultant connector terminal unit 18 intermittently moves through the movement stroke S of the conveyance base 43 (42') for each molding cycle, and is successively sent to the take-up device 20.

The buffer devices 75 and 76 provided between the unwinding device 16 and the take-up device 20 and the transfer devices 30 and 28 are equipped with sensors 78a and 78b at positions vertically spaced apart from each other, and send a signal to the unwinding device 16 and the take-up device 20 so that slack is always maintained through intermittent feed, sequentially controlling their respective drive motors (not shown) and guaranteeing smooth unwinding and take-up. For example, when the hoop terminal 12 touches the upper sensor 78a of the buffer device 75 on the unwinding device 16 side, the drive motor of the unwinding device 16 is operated to pay out the hoop terminal 12, and, when the hoop terminal 12 touches the lower sensor 78b, the drive motor is stopped. On the other hand, on the take-up device 20 side, when the hoop terminal 12 sent out from the transfer device 30 touches the lower sensor 78b of the buffer device 77, the drive motor of the take-up device 20 is operated to take up the hoop terminal 12, and, when it touches the upper sensor 78a, the drive motor is stopped. Thus, no excessive tension is applied to the hoop terminal 12.

As can be seen from the above description, in the terminal transfer mechanism incorporated into the mold of the present invention, the transfer mechanism is in one-to-one correspondence with the mold, and the transfer mechanism is formed with an accuracy suitable for each of different molds, so that, in the case of products automatically manufactured through successive and intermittent feeding of the terminal rows 13 by means of the strip-like carrier 11, it is possible to efficiently and quickly cope with the replacement of the mold, which is required in the case of the production of various types of products, or due to an abrupt change in the specifications or the production lot amount, thus shortening the downtime of the injection molding machine.

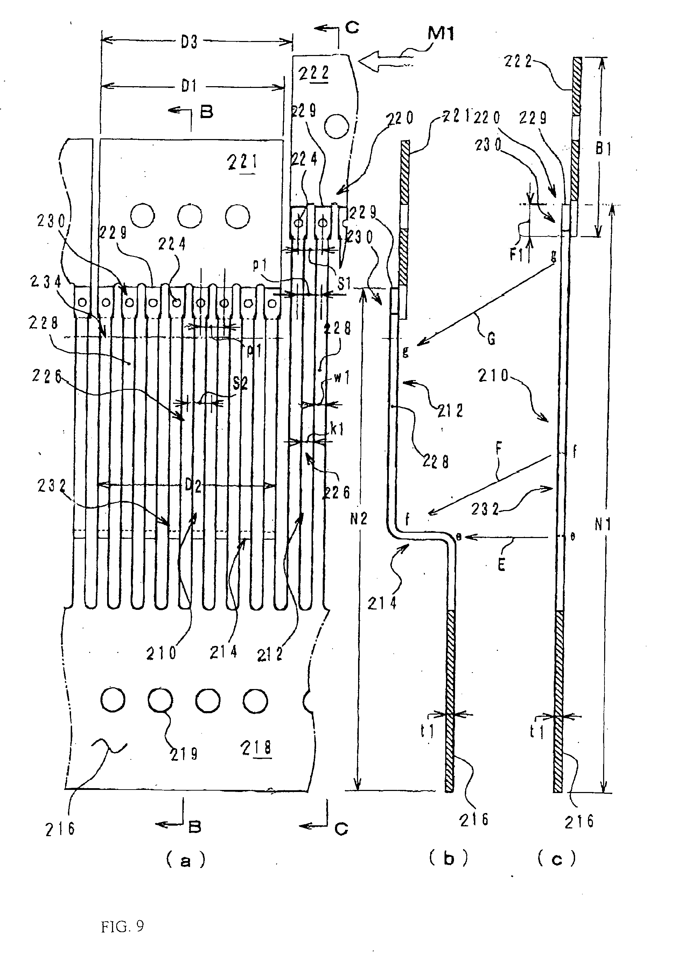

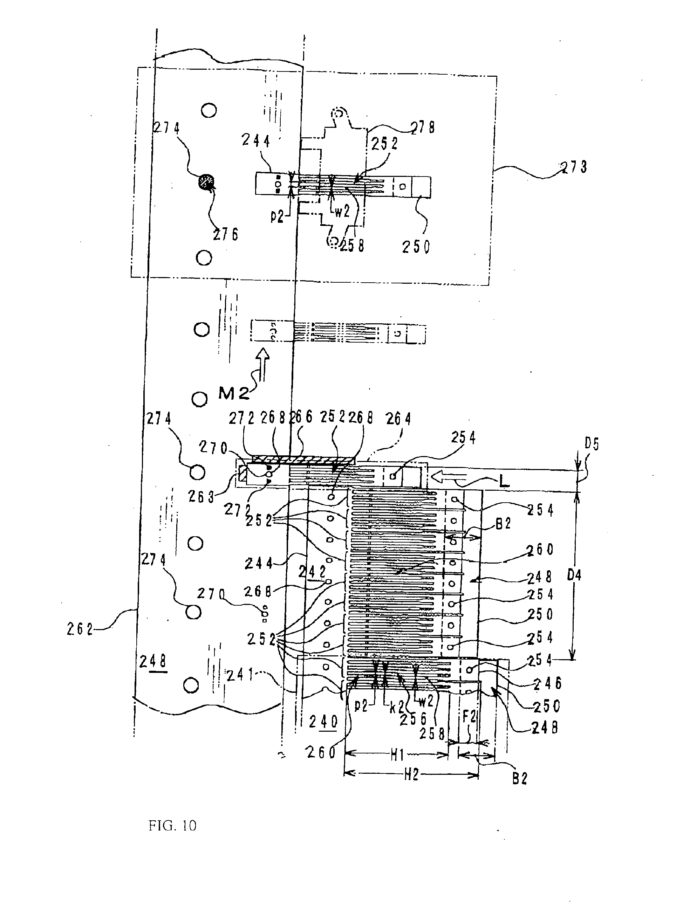

Next, a method of insert-molding terminal units by the insert molding apparatus constructed as described above will be described with reference to Figs. 9 and 10.

Figs. 9A through 9C are diagrams showing a first embodiment of the insert molding method, of which Fig. 9A is a plan view showing a terminal row 210, and Figs. 9B and 9C are sectional views thereof. At the right-hand end of the plan view of Fig. 9A, a part of a terminal row 212 prior to bending is shown, and the rest has undergone bending, with the result that an original longitudinal (vertical direction in the drawing) length N1 is reduced to an apparent length N2 after the bending due to the provision of a bent portion 214. For example, one longitudinal side (the lower side in the drawing) of a highly conductive metal strip material 216 with a thickness t1 of 0.1 mm constitutes a carrier base plate 218, and along an end portion 220 thereof on the opposite side, a dummy terminal 222 formed of an inexpensive material (e. g. , a thin brass plate) with an appropriate width B1 is bonded to the end portion 220 in an appropriate overlapping width F1, crimp bonding being effected at crimp positions 224 distributed at a pitch S1, which corresponds to a predetermined terminal interval. Alternatively, the dummy terminal is bonded so as to extend over the entire bonding surface by an appropriate adhesive. A length D1 of the dummy terminal plate 222 is set substantially equal to a width D2 of the terminal row 212 (210) on which bending is effected by a pressing machine (not shown).

Parallel grooves 226 with a width K1 of 0.2 mm are formed by punching at equal intervals S2 to form terminal members 228 with a width W1 of 0.2 mm arranged at a predetermined pitch p1 (= S1 = S2) of 0.3 mm so as to be aligned in parallel in a plane, thus forming the terminal row 212. The grooves 226 are open at an end edge 229 of the metal strip material 216, with each terminal member 228 extending independently from the carrier base plate 218; free end portions 230 of the terminal members 228 are held by the dummy terminal plates 221 and 222 so as to be protected from unexpected external forces. The portion of the highly conductive metal strip material 216 bonded to the dummy terminal plate 222 (in the overlapping width of F1) is punched to form the terminal row 212, which is fed, by feeding its carrier base plate 218, to the pressing machine at an intermittent feeding pitch of D3 in the direction of the arrow M1, and positioning is accurately effected thereon by means of pilot holes 219.

The pressing machine bends an intermediate portion 232 of the terminal row 212 near the carrier base plate 218 at one stroke at a point e at right angles (as indicated by the arrow E), and bends it at a point f at right angles (as indicated by the arrow F) so as to make it parallel to the carrier base plate 218, thus providing a planar step between the carrier base plate 218 and the free ends 230 of the terminal row 212. A point g on the free end 230 side moves in the direction of the carrier base plate 218 (as indicated by the arrow G). Thus, the preceding dummy terminal plate 221 is pulled by the terminal row 212 at the point G to move in the direction of the carrier base plate 218, whereas, the succeeding dummy terminal plate 222, which is independent, is not influenced, and remains on standby for the next bending stroke. Regarding the terminal row 210 which has undergone bending, the corresponding portion of the dummy terminal plate 222 is cut off together with a portion of the free ends 230 of the terminal members 228 at a severing position 234 near the end edge 229 of the terminal row 210.

Fig. 10 is a schematic plan view illustrating a manufacturing method according to an embodiment in which, as in the insert molding method shown in Fig. 9, bending is effected as indicated by symbols e and f to integrally form a terminal unit by insert molding. Numeral 240 indicates a preparation material for a terminal row, which, in the example shown, is situated at a bending station 241 of a pressing machine and in the state prior to bending. That is, although not shown, the side constituting a carrier 244 of a highly conductive metal strip material 242 is set beforehand, and a brass strip material 248 which is generally inexpensive and which has a width of, for example, B2, and an appropriate thickness is bonded thereto as a dummy terminal plate 250 in an appropriate overlapping width F2 so as to extend along a side edge 246 on the opposite side. The bonding is effected by crimping at crimp positions 254 provided for each four-terminal set 252, or glued by adhesive so as to extend over the entire bonding surface.

Subsequently, parallel grooves 256 with a gap K2 of 0.2 mm are formed by punching to thereby form a terminal row 260 in an effective length of H1 in which terminal members 258 with a width W of 0.2 mm are aligned in parallel in a plane at a predetermined pitch p2 of 0.3 mm. Further, regarding the terminal row 260, the dummy terminal 250 is cut off to a length H2 at a position corresponding to a length D4, which corresponds to eight sets of four-terminal groups 252, the end line of the highly conductive metal strip material 242 being completely severed for each four-terminal set 252.

The preparation material 240 prior to bending, only a part of which is shown in the drawing, is processed at a stroke by the length D4, which is equal to the dummy length corresponding to eight four-terminal sets 252 facing the bending station 241 of the pressing machine, so that it is possible to achieve an improvement in efficiency and the service life of the mold. The dummy terminal plate 250 is independent by the length D4, so that the bending of the preceding terminal row 260 including eight four-terminal sets 252 does not affect the subsequent preparation material 240 which is adjacent thereto and which has not undergone bending.

A carrier 262 for successive insert molding, which runs parallel to the carrier 244 of the highly conductive metal strip 242, is fed intermittently forwards in the direction of the arrow 142 in synchronism with the molding cycle of the injection molding machine. A carrier 264 constituting a press-fitting station, severing the carrier 244 and the dummy terminal 250 corresponding to the four-terminal sets 252, moves along a stopper 266 toward the molding carrier 262 (the direction indicated by the arrow L), until it abuts an abutment member 263. Positioning holes 268 previously provided in the carrier 244 and guide holes 270 of the molding carrier 262 are aligned with each other to thereby accurately effect positioning, and the four-terminal sets 252 are bonded to the molding carrier 262 by a crimping means 272.

The molding carrier 262 feeds the four-terminal sets 252 forwards to introduce them into the insert molding mold of an injection molding station 273. Pilot holes 274 of the molding carrier 262 are engaged with a positioning pin 276 of the mold (not shown) to accurately position with respect to the mold the four-terminal set 252 aligned by the guide holes 270 in an accurate positional relationship with the pilot holes 274. Then, the mold is closed by a well-known pressurizing means, and a connector terminal unit 278 is formed by injection molding.

As can be seen from the above description, in the method of the present invention for insert-molding a minute-pitch terminal unit, products are automatically manufactured through forward and intermittent feeding of a strip-like carrier integrated with successively arranged terminal rows, wherein the free ends of the terminals are held by dummy terminals to thereby reinforce the terminals, insert molding being performed on fine-structure parts through a process requiring high accuracy, so that the method is applicable to any product in which thin members extend in a comb-like fashion from a base member and in which bending is effected in a middle portion thereof while accurately maintaining the relative positions of the free ends of the thin members.

## Claims

1. A terminal row insert molding method in which, on one side of a carrier base plate for conveying terminal materials to a processing position of an insert molding machine, a predetermined number of terminals to be subjected to insert molding are formed at a minute pitch alternately with and parallel to open grooves and are grouped into terminal rows, each terminal row being composed of an intermediate portion near the carrier base plate and a free end far from the carrier base plate,
wherein, in performing successive bending on the intermediate portion through intermittent feeding by a conveying mechanism for forward feeding, a dummy terminal plate, which binds the free ends for each feeding pitch of the conveying mechanism, is bonded to forward end portions of the free ends not affected by the bending with connecting means allowing separation along the feeding direction.

2. A terminal row insert molding method according to Claim 1, wherein the carrier base plate comprises a highly conductive metal strip.

3. A terminal row insert molding method according to Claim 1 or 2, wherein the metal strip forming the terminals comprises a highly conductive metal strip.

4. A terminal row insert molding method according to one of Claims 1 through 3, wherein the connecting means allowing separation effects a temporary connection by crimping.

5. A terminal row insert molding method in which, on one side of a carrier base plate for conveying terminal materials to a processing position of an insert molding machine, a predetermined number of terminals to be subjected to insert molding are formed at a minute pitch alternately with and parallel to open grooves and are grouped into terminal rows, each terminal row being composed of an intermediate portion near the carrier base plate and a free end far from the carrier base plate, a process of successive bending being performed on the intermediate portion through intermittent feeding by a forward-feeding pressing machine,
wherein a process for insert molding on each terminal row formed of a highly conductive metal strip material together with synthetic resin comprises the steps of: bonding a dummy terminal plate long enough to effect binding for each feeding pitch of the forward-feeding pressing machine to a forward end portions of the free end; bending the intermediate portion; putting the intermediate portion that has undergone bending into a mold for the synthetic resin; injecting the synthetic resin into the mold unit to integrally mold the terminal row into a terminal unit; and removing the dummy terminal.

6. An insert molding apparatus comprising an in-mold hoop mechanism for successively and intermittently feeding to an injection molding machine a hoop terminal in which a group of terminal rows with terminals aligned at a minute pitch are arranged at equal intervals along a carrier base plate structured by a strip-like metal thin plate to automatically form the terminal rows into connector terminal units through insert molding,
wherein a sensing device is provided which, when each of the terminal rows is transferred automatically and intermittently to a mold of the injection molding machine to be fitted in at a proper corresponding position in a cavity of the mold in a still state, confirms that the terminal row is accurately matched with the corresponding position of the cavity of the mold prior to clamping.

7. An insert molding apparatus according to Claim 6, wherein, when an upper surface of each terminal row to be inserted is pressurized by a head at a forward end of an elastically urged presser arm toward a fitting position in the cavity of the mold, if the presser arm does not reach a predetermined position but stops outside a predetermined permissible range, the sensing device issues an alarm to stop the operation of the in-mold hoop mechanism.

8. An insert molding apparatus, comprising an automatic terminal transfer mechanism for successively and intermittently feeding a hoop terminal to an injection molding machine, wherein a device for transferring a hoop terminal intermittently and automatically is directly fixed to a mold itself attached to the injection molding machine.

9. An insert molding apparatus according to Claim 8, wherein the device for transferring the hoop terminal intermittently and automatically comprises a pair of devices driven on the input side and the output side of the mold in synchronism with each other and respectively and directly fixed to side surfaces on the input side and the output side of the mold.
